Europäisches Patentamt

(19) European Patent Office

Office européen des brevets

(11) Publication number: **0 197 651**
**B1**

(12) **EUROPEAN PATENT SPECIFICATION**

(45) Date of publication of the patent specification:
**14.06.89**

(21) Application number: **86301541.8**

(22) Date of filing: **05.03.86**

(51) Int. Cl.⁴: **F16D 25/14**

(54) **Fluid operated clutch system.**

(30) Priority: **18.03.85 US 713054**

(43) Date of publication of application:
**15.10.86 Bulletin 86/42**

(45) Publication of the grant of the patent:
**14.06.89 Bulletin 89/24**

(84) Designated Contracting States:
**DE FR GB**

(56) References cited:
**EP-A- 0 059 968**
**FR-A- 1 060 881**
**US-A- 4 081 065**
**US-A- 4 235 415**
**US-A- 4 361 060**

(73) Proprietor: **EATON CORPORATION, Eaton
Center, 1111 Superior Avenue, Cleveland
Ohio 44114(US)**

(72) Inventor: **Braun, Eugene Ralph, 804 Lloyd, Royal Oak
Michigan 48067(US)**

(74) Representative: **Douglas, John Andrew, Eaton House
Staines Road, Hounslow Middlesex TW4 5DX(GB)**

ACTORUM AG

## Description

### INTRODUCTION

This invention relates generally to a fluid pressure operated clutch system for engaging and disengaging a driven member from a drive member and more particularly to such system wherein the clutch is of either the resiliently biased normally disengaged or engaged type and the driven member is an input member of a gear selecting transmission and the drive member is driven by a vehicular engine and means are included to respectively automatically engage and disengage the clutch when the fluid pressure falls below a predetermined value.

### BACKGROUND OF THE INVENTION

Fluid pressure operated clutch systems for engaging and disengaging the driven member of a gear selecting transmission with a drive member such as a vehicular engine crank shaft, whether automatic or operator controlled, have been known for many years. Such systems are particularly advantageous when a source of fluid pressure already exists such as for example in motor vehicle applications where pressurized air or hydraulic fluid is used for braking purposes.

Generally such systems employ a transmission having an input or driven member that rotates when engaged with a drive member rotated by an engine crankshaft to enable the transmission to provide various gear ratio outputs to an output shaft such as a vehicle drive shaft. It is highly preferable to shift between gears of a transmission when the driven member of the transmission is disengaged from the engine drive member to prevent damage to the transmission gear train. Thus, the purpose of the clutch is to disengage the engine drive member from the transmission driven member while the gear shift is being made and, once made, re-engage the two together. Such can be accomplished in standard trasnmissions by depressing a clutch pedal and in automatic transmissions by us eof engine speeed sensors and other circuitry resulting in the automatic shift of gears at selected engine or transmission output speeds. Prior art clutches are normally either of the spring biased normally engaged or disengaged type. In certain situations, such as in automatic clutch systems for automatic mechanical transmissions systems as illustrated in U.S. Patent Nos. 4 081 065 and 4 361 060 the disclosures of which are hereby incorporated by reference, normally disengaged clutches may be preferable.

One of the potential problems with pressurized fluid type clutch systems utilizing normally disengaged clutches is their loss of function as a result of loss of fluid pressure for one reason or another for in most cases loss of fluid pressure will result in disengagement of the clutch which results in freewheeling and loss of engine braking on the vehicle. Alternatively, loss of fluid pressure in a normally engaged fluid pressure clutch system to a value below a predetermined value may require hand disengagement by an operator for such systems in the past have not been provided with means for automatically disengaging the clutch.

Accordingly, it is highly desirable that fluid pressure controlled clutch systems utilizing normally disengaged clutches be provided with means of automatically insuring that the transmission becomes or remains engaged with the engine drive member when the fluid pressure drops below a predetermined minimum level and that normally engaged clutch systems are provided with means of automatically disengaging the clutch.

### SUMMARY OF THE INVENTION

Accordingly, it is an object of this invention to provide an improved fluid pressure operated clutch operating system for engaging and disengaging a driven member from a drive member.

It is another object of this invention defined in Claim 1, to provide an improved fluid pressure controlled clutch operating system of the normally disengaged type for engaging and disengaging a driven member eg of a gear selecting transmission, from a drive member, eg driven by a vehicular engine that is able to automatically establish or maintain the engagement in the event of loss of fluid pressure below a predetermined value.

It is still another object of this invention which is defined in Claim 2, to provide an improved fluid pressure controlled clutch system of the normally engaged type for engaging and disengaging a driven member, eg of a gear selecting transmission, from a drive member, eg driven by a vehicular engine, that is automatically able to disengage the driven member in the event of loss of fluid pressure below a predetermined value.

### BRIEF DESCRIPTION OF THE DRAWINGS

FIGURE 1 shows a combined cross-sectional and block diagram view of an embodiement of the improved fluid pressure operated clutch system of the invention where the clutch is of the normally disengaged type;

FIGURE 2 shows a part cross-sectional view of an alternate arrangement of a fluid-pressure piston of the system of Figure 1; and

FIGURE 3 shows a combined cross-sectional and block diagram view of an embodiment of the improved fluid operated clutch system of the invention where the cluth is of the normally engaged type.

### DESCRIPTION OF SOME PREFERRED EMBODIMENTS

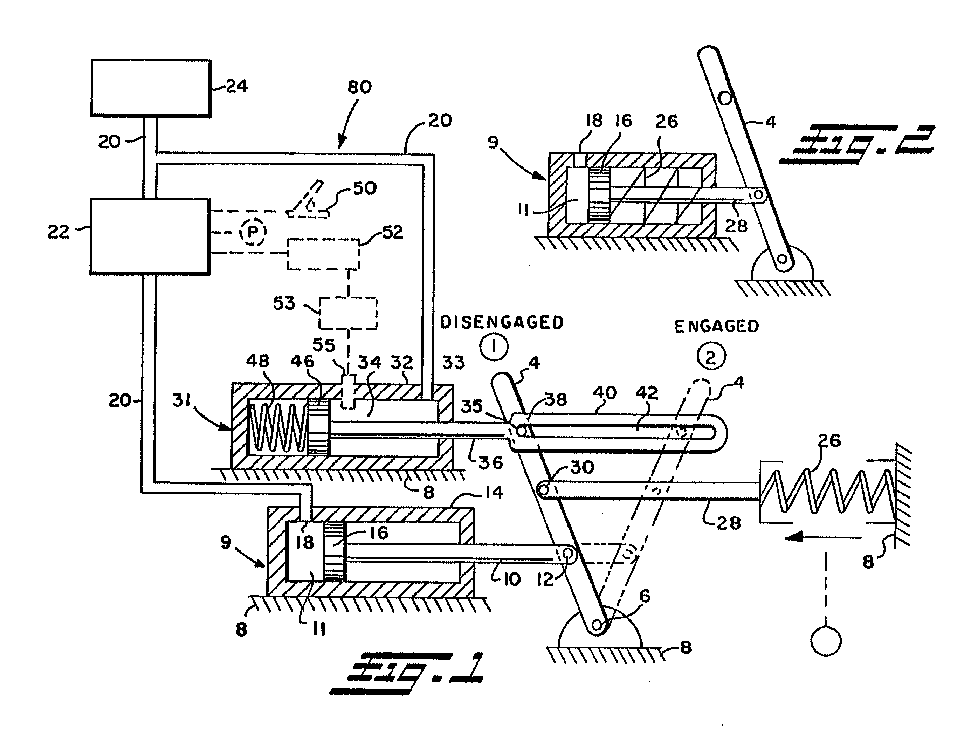

FIGURE 1 shows a preferred embodiment of a fluid pressure operated clutch system 80 of the invention where the clutch is of the normally disengaged type. System 80 has a control member 4 that is moveable between first position 1 and second position 2. For illustrative purposes, when member 4 is at position 1, the clutch has disengaged the drive member driven by the engine with a driven input member of a transmission as previously described. When member 4 is at position 2, as shown in dashed line form, the clutch has engaged the drive member from the transmission driven input member. Understandably, the reverse condition resulting from rearranging the various components is within the scope of the invention. The linkage to the clutch plate enabling movement of member 4 between the first and second positions to respectively disengage and engage the drive member and transmission driven member is not shown for any suitable linkage may be used. Preferably, member 4 is in the form of a control arm or lever pivotably mounted at one end to frame 8 which may be a portion of the housing of the transmission itself by means of pivot pin 6 so that member 4 rotates about pivot pin 6 between positions 1 and 2 as shown in FIGURE 1. Appropriate linkages may be used to engage and disengage the clutch plate according to the manner in which member 4 moves between positions 1 and 2.

First fluid operated actuator means preferably in the form of piston means 9 is operably connected to control member 4. In cases where member 4 rotates about a fixed pivot point as shown in FIGURE 1, an end of piston rod 10 of piston means 9 may be pivotably mounted such as by pivot pin 12 so as not to interfere with the rotary motion of member 4. Piston means 9 comprises a fluid tight cylinder 14 having an inner chamber 11 containing head 16 of piston rod 10. Cylinder 14 has an entry port 18 for receiving pressurized fluid such as air or hydraulic fluid into chamber 11. Piston means 9 is secured to frame 8 or other suitable frame restricted against movement and it can readily be seen that introduction of fluid through port 18 into chamber 11 on the backside of head 16 under sufficient pressure to overcome the the force of spring 26 and the inertia of piston rod 10 and member 4 and its connecting linkage with the clutch plate will cause piston rod 10 to move member 4 from position 1 to position 2.

First resilient biasing means preferably in the form of previously mentioned coiled spring 26 is secured to frame 8 and operably connected to member 4 by means of rod 28 having one of its ends pivotably mounted to member 4 such as by means of pivot pin 30 shown in FIGURE 1. Alternatively, spring 26 may be an internal part of the clutch to provide the normally disengaged condition of the clutch previously described and the term "normally disengaged" includes the use of such resilient biasing means. In FIGURE 1, spring 26 is in an extended condition. Spring 26 is selected to provide a spring force sufficient to urge member 4 from position 2 to position 1 when the fluid pressure on the backside of head 16 in chamber 11 of piston means 9 drops below some predetermined value to provide the previously described normally disengaged type of clutch system. Thus, for a particular range of fluid pressure, the combination of piston means 9 and biasing means such as coiled spring 26 is able to move member 4 back and forth between positions 1 and 2 as described.

Piston means 9 receives pressurized fluid from control valve means 22 by means of suitable tubing 20. Valve means 22 receives pressurized fluid from a suitable supply source 24 through suitable tubing 20 as shown in FIGURE 1. Pressurized fluid source 24 may be a chamber containing pressurized fluid such as air for use in braking that is pressurized by means of an air compressor driven by a vehicular engine as previously described.

Valve means 22 may be any suitable valve able to receive pressurized fluid and provide a pressurized fluid output signal therefrom that is controlled in the manner desired to move member 4 from position 1 to position 2. Valve means 22 is operative to provide the pressurized fluid output signal or cease provision of the output signal according to whether it receives an actuating or deactuating signal from either a clutch pedal 50 when system 80 is used with a standard transmission or control means 52 when system 80 is used with an automatic transmission. Control means 52 is operative to sense one or more conditions such as engine speed, output speed, throttle position, transmission control arm position, or other condition and provide either an actuating signal or a deactuating signal by comparing the sensed condition to a predetermined condition.

In the case of a standard transmission, pressing pedal 50 down by an operator provides an actuating signal to valve means 22 which causes valve means 22 to provide a controlled fluid pressure output signal that is received by piston means 9 which in turn operates to apply the clutch by moving control member 4 from position 1 to position 2. When the operator releases pedal 50, valve means 22 ceases to provide the same controlled output signal but rather none or one sufficiently lower in value to enable spring 26 to urge member 4 from position 2 to position 1 as previously described.

In cases where system 80 is used in conjunction with an automatic transmission, valve means 22 includes previously described control means 52 for providing actuating and deactuating signals to valve means 22 according to, for example, the speed of the engine being sensed by control means 52. Circuitry, not shown, can be used to provide the deactuating signal to valve means 22 when, for example, the engine speed reaches a particular rpm at which it is desired to shift gears of the transmission and to provide the actuating signal to valve means 22 after the shift has been made.

Means such as comparator 53 hereinafter described may also be included for comparing a speed sensed by control means 52 to a preset speed condition such as, for example, transmission output shaft rpm corresponding to a vehicle speed of 5 mph and operate to provide an actuating signal to valve means 22 to insure that valve means 22 provides the output signal to piston means 9 which in turn moves or maintains member 4 in engagement position 2 for a braking action or provides a deactuating signal to valve means 22 causing valve means 22 to cease providing the output signal to piston means 9 which in turn enables spring 26 to move member 4 to the disengaged position 1 enabling shifts at low rpm.

Additionally, system 80 may be operative where the transmission includes a park "P" position which provides an actuating signal to valve means 22 to provide the output signal causing piston means 9 to move member 4 to engaged position 2 to enable the inertia of the transmission gear train and the rest of the components operatively coupled to its output shaft to aid in braking action.

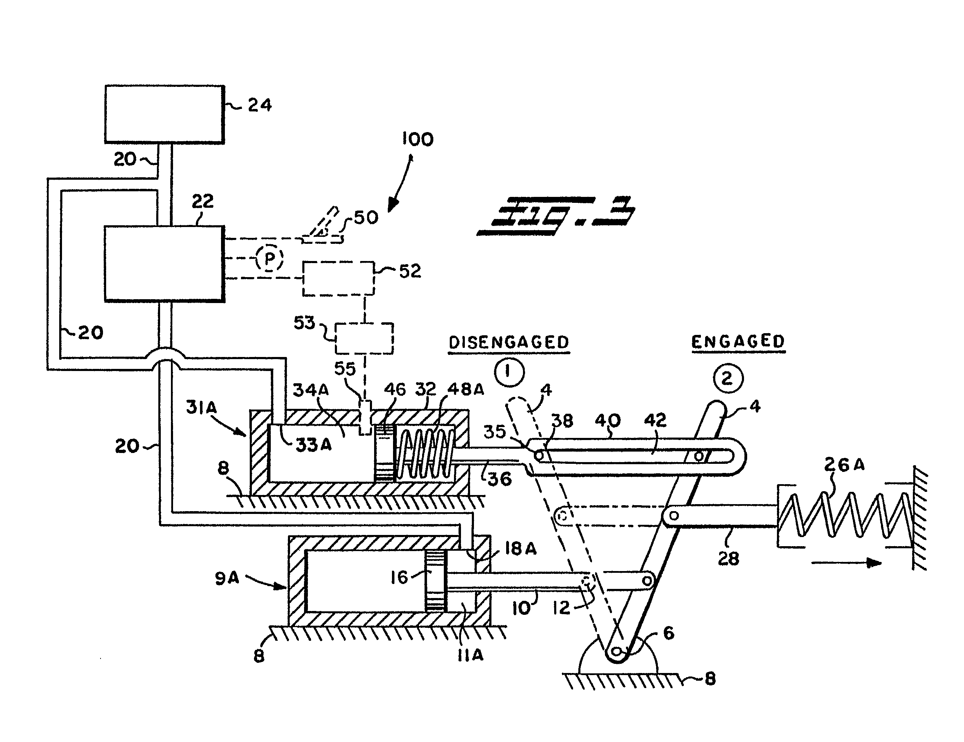

The first biasing means such as spring 26 may be incorporated into first piston means 9 as shown in FIGURE 2 where such is desired or it may be internal to the clutch as previously described. Deposing spring 26 in chamber 11 on the side of head 16 facing piston rod 28 and introducing and varying the controlled fluid pressure output signal into chamber 11 on the opposite side of head 16 enables piston rod 28 to move back and forth and accordingly move member 4 between positions 1 and 2. The combination of previously described pressure source 24, control valve means 22, and clutch pedal for standard transmission or control means 52 preferably including comparator means 53 for automatic transmissions for engaging and disengaging a driven member of a gear selecting transmission with a drive member such as a vehicular engine crankshaft is well known in the art.

The manner by which system 80 is able to automatically maintain or move control member 4 into engaged position 2 in the event of complete loss of fluid pressure or reduction thereof to a value below some predetermined minimum value is hereinafter described with reference to a second fluid operated actuator means preferably in the form of piston means 31.

Piston means 31 is constantly connected to fluid supply 24 and is operable to receive pressurized fluid from supply 24 through tubing 20 as shown in FIGURE 1.

Piston means 31 has a fluid tight cylinder 32 enclosing chamber 34 into which the pressurized fluid is introduced by means of port 33 on the side of head 46 facing towards piston rod 36. Second resilient biasing means such as coiled spring 48 is preferably disposed in chamber 34 on the opposite side of head 46. When control member 4 is in position 1 as shown in FIGURE 1, the pressurized fluid is able to compress spring 48 as shown. Spring 48 is chosen to provide a spring force that is able to urge piston rod 36 towards the viewer's right when the fluid pressure in chamber 34 drops to zero or otherwise drops below some predetermined minimum level. Piston rod 36 is operatively connected to control member 4 in such a manner that enables member 4 to move between positions 1 and 2 as previously described yet enables piston means 31 to move member 4 from position 1 to position 2 when for one reason or another fluid pressure supply 24 is unable to provide pressurized fluid to chamber 34 above a predetermined minimum level.

System 80 may additionally include latch means such as stop pin 55 shown in dashed line form in FIGURE 1 that is operable to prevent spring 48 from moving the clutch preferably by entering chamber 34 of piston means 31 and prevent member 4 from moving from position 2 to position 1 upon receipt of an actuating signal from comparator 53 when, for example, the vehicle speed sensed by control means 52 falls below a predetermined minimum reference speed for example of 5 mph or, alternatively, climbs above a predetermined maximum.

Preferably, the end of piston rod 36 is provided with a slotted member 40 having a slot 42 into which extends a pin 38 from member 4 which rests against end 35 of slot 42 when member 4 is in position 1 as shown in FIGURE 1 enabling end 35 of member 40 to press against and urge control member 4 from position 1 to position 2 when the spring force of spring 48 becomes greater than the force of the fluid pressure in chamber 34 of piston means 31. Conversely, arm 4 remains at position 1 as long as the fluid pressure delivered to chamber 34 of piston means 31 remains above a predetermined minimum value. The combination of the second fluid actuated device means, second resilient biasing means and the linkage linking the second fluid actuated device means with control arm 4 herein described is broadly termed "override means" for the purposes of this invention.

It is to be understood that the invention includes members other than member 40 which enable movement of piston rod 36 to move member 4 from position 1 to position 2 yet enable free movement of member 4 between positions 1 and 2 when the spring force of the spring 48 is less than the counter force provided by the fluid pressure in chamber 34. Preferably, system 80 also includes linkage means operable to enable an operator to override biasing means 48 for start up when fluid pressure is low.

FIGURE 3 shows an embodiment of the fluid pressure operated clutch system of the invention in the form of system 100 for use with a clutch of the normally engaged type.

Excepting for distinguishing particularities with respect to the operation of the first and second fluid operated actuator means and the resilient biasing means biasing the clutch in the engaged condition, system 100 is substantially the same as previously described for system 80.

In system 100, a spring 26A urges arm 4 into engaged position 2 as shown in FIGURE 3. Although shown connected to arm 4 by means of a connecting arm 28 as in system 80, spring 26A may be internal to the clutch and not required to be separately connected to arm 4.

First fluid operated acutator means in the form of piston means 9A receives controlled fluid pressure into chamber 11A through port 18A from tubing 20. The controlled fluid pressure is provided by control valve means 22 which in turn receives fluid pressure from fluid pressure source 24 and delivers controlled fluid pressure according to whether it receives an actuating or deactuating signal from a clutch pedal in the case of a standard transmission or from a control means such as control means 52 in the case of an automatic transmission as previously described.

Piston means 9A includes a piston rod 10 having a cylinder head 16 within chamber 11A. Piston rod 10 is coupled by pin 12 to arm 4. It can readily be seen that introduction of controlled fluid pressure into chamber 11A on the side of head 16 facing towards rod 10 sufficient to provide a force overcoming the force of spring 26A causes head 16 and rod 10 to move arm 4 towards the viewer's left into disengaged position 1 upon receipt by valve means 22 of an actuating signal. Conversely, when fluid pressure is cut off from chamber 11A or otherwise is insufficient to provide a force sufficient to overcome the force of spring 26A, arm 4 is caused to move towards the viewer's right into engaged position 2. Thus, arm 4 is able to be moved back and forth between the engaged and disengaged position according to whether valve means 22 received an actuating or deactuating signal as is well known in the art.

The improvement provided by system 100 with respect to automatically placing the clutch in a disengaged condition when the fluid pressure of the supply source drops below a predetermined value is hereinafter described with respect to second fluid operated actuator means in the form of piston means 31A, resilient biasing means in the form of spring 48A, and the means by which piston 31A is connected to arm 4, the combination being called "override means" for the purposes of this invention.

Fluid pressure is constantly received into chamber 34A of piston 31A through port 33A from fluid pressure source 24 on the side of piston head 46 facing away fom piston rod 36 as shown in FIGURE 3. Spring 48 is disposed in chamber 34A on the side of head 46 facing towards piston rod 36. As long as the fluid pressure in chamber 34A remains above a predetermined value, head 46 and rod 36 remain in the position shown in FIGURE 3. Rod 36 provides part of the connection to device 40 previously described enabling arm 4 to move back and forth between disengaged position 1 and engaged position 2 as long as fluid pressure in chamber 34A remains above a predetermined value.

Spring 48A is selected to provide a force sufficient to move head 46, rod 36 and device 40 towards the viewer's left which causes arm 4 to move into disengaged position 1 whenever the fluid pressure in chamber 34A drops below a predetermined value. Thus, system 100 is able to provide a conventional fluid pressure clutch system of the normally engaged type with means by which the clutch is able to be placed in a disengaged condition whenever the fluid pressure from the fluid pressure source drops below a predetermined valve.

Although not shown in the FIGURES, the clutch system of the invention may also include means for manually moving control arm 4 to a disengaged condition for start-up when the fluid pressure is zero or has fallen below a predetermined minimum value.

**Claims**

1. An operating system for (80) a fluid operated clutch of the type normally in a disengaged condition and operable to engage and disengage a drive member from a driven member, said system being of the type comprising a source or pressurized fluid (24) and first fluid operated actuator means (9) selectively connectable to said fluid source for moving said clutch to an engaged condition in response to an actuating signal received thereby, and said operating system characterized by including override means comprising resilien biasing means (48) and a second fluid operated actuator means (31) constantly connected to said fluid source (24), said biasing means (48) operative to urge said clutch to the engaged condition thereof whenever said fluid source pressure falls below a predetermined value, and said second fluid operated actuator means (31) operative to overcome said biasing means and allow said first fluid operated actuator means (9) to move said clutch between the engaged and disengaged conditions thereof as long as said fluid source pressure remains above said predetermined value.

2. An operating system (100) for a fluid operated clutch of the type normally in an engaged condition and operable to engage and disengage a drive member from a driven member, said system being of the type comprising a source of pressurized fluid (24) and a first fluid operated actuator means (9A) selectively connectable to said fluid source for moving said clutch to a disengaged condition in response to an actuating signal received thereby, said operating system characterized by including override means comprising resilient biasing means (48A) and a second fluid operated actuator means (31A) constantly connected to said fluid source, said biasing means (48A) operative to urge said clutch to the disengaged condition thereof whenever said fluid source pressure falls below a predetermined value, and said second fluid operated actuator means (31A) operative to overcome said biasing means (48A) and allow said first fluid operated actuator means (9A) to move said clutch between the engaged and disengaged conditions thereof as long as said fluid source pressure remains above said predetermined value.

3. The system of claim 1 or 2 wherein said actuating signal is provided by depression of a clutch (50) pedal by an operator.

4. The system of claim 1 or 2 wherein said fluid operated clutch is automatic and control means (52) is included for sensing at least one condition and providing said actuating signal according to the value of the condition sensed.

5. The system of claim 4 wherein the control means (52) includes a speed sensor and the condition sensed is speed of a selected member.

6. The system of claim 1 including a park condition (P) and said actuating signal is provided when the clutch is placed in the park condition by an operator.

7. The system of claim 2 including a park condition (P) and said actuating signal is not provided when the clutch is placed in the park condition by an operator.

8. The system of claim 1 or 2 wherein said first fluid operated actuator means comprises a control valve means (22) and a first piston means (l4), said first piston means connected to said valve means and operative to move the clutch between said engaged and disengaged conditions, and said valve means connected to said fluid source and operative to receive said actuating signal.

9. The system of claim 1 or 2 wherein the second fluid operated actuator means (31, 31A) comprises a piston means (32).

10. The system of claim 9 wherein the resilient biasing means (48, 48A) is disposed within a chamber (34, 34A) of said piston means (32).

11. The system of claim 4 including a stop pin operative to prevent the biasing means from moving the clutch when the condition sensed by the control means reaches a predetermined value.

12. The system of claim 11 wherein the condition sensed is speed of a selected member and the predetermined value is a selected minimum speed of the selected member below which the stop pin (55) is operative to prevent the biasing means (48) from moving the clutch.

13. The system of claim 11 wherein the condition sensed is speed of a selected member and the predetermined value is a selected maximum speed of the selected member above which the stop pin (55) is operative to prevent the biasing means (48) from moving the clutch.

14. The system of claim 1 including linkage means operative to overcome the biasing means (48) to disengage the clutch.

15. The system of claim 1 or 2 wherein the driven member is an input member of a gear selecting transmission.

16. The system of claim 1 or 2 wherein the driven member is an input member of a gear selecting transmission and the drive member is driven by a vehicular engine.

**Patentansprüche**

1. Betätigungssystem (80) für eine fluidbetätigte Kupplung, die normalerweise in einer ausgerückten Stellung ist und zum Kuppeln sowie zum Trennen eines Antriebsgliedes mit einem angetriebenen bzw. von einem angetriebenen Glied eingerichtet ist, wobei das System eine Quelle (24) für unter Druck stehendes Fluid und ein erstes fluidbetätigtes Stellmittel (9) aufweist, das wahlweise mit der Fluidquelle verbindbar ist, um die Kupplung abhängig von einem von ihr empfangenen Betätigungssignal in eine eingerückte Stellung zu bewegen und wobei das Betätigungssystem dadurch gekennzeichnet ist, daß es Übersteuerungsmittel umfaßt, die ein federndes Vorspannmittel (48) sowie ein dauernd mit der Fluidquelle (24) verbundenes zweites fluidbetätigtes Stellmittel (31) aufweisen, wobei das Vorspannmittel (48) dazu dient, die Kupplung immer dann in ihre eingerückte Stellung zu bringen, wenn der Druck der Fluidquelle unter einen vorbestimmten Wert fällt, und das zweite fluidbetätigte Stellmittel (31) dazu dient, das Vorspannmittel zu überwinden und es dem ersten fluidbetätigten Stellmittel (9) zu ermöglichen, die Kupplung zwischen ihrer eingerückten und ihrer ausgerückten Stellung solange (hin und her) zu bewegen, wie der Druck der Fluidquelle über dem vorbestimmten Wert bleibt.

2. Betätigungssystem (100) für eine fluidbetätigte Kupplung, die normalerweise in einer eingerückten Stellung ist und zum Kuppeln sowie zum Trennen eines Antriebsgliedes mit einem angetriebenen bzw. von einem angetriebenen Glied eingerichtet ist, wobei das System eine Quelle (24) für unter Druck stehendes Fluid und ein erstes fluidbetätigtes Stellmittel (9A) aufweist, das wahlweise mit der Fluidquelle verbindbar ist, um die Kupplung abhängig von einem von ihr empfangenen Betätigungssignal in eine ausgerückte Stellung zu bewegen und wobei das Betätigungssystem dadurch gekennzeichnet ist, daß es Übersteuerungsmittel umfaßt, die ein federndes Vorspannmittel (48A) sowie ein dauernd mit der Fluidquelle verbundenes zweites fluidbetätigtes Stellmittel (31A) aufweisen, wobei das Vorspannmittel (48A) dazu dient, die Kupplung immer dann in ihre ausgerückte Stellung zu bringen, wenn der Druck der Fluidquelle unter einen vorbestimmten Wert fällt, und das zweite fluidbetätigte Stellmittel (31A) dazu dient, das Vorspannmittel zu überwinden und es dem ersten fluidbetätigten Stellmittel (9A) zu ermöglichen, die Kupplung zwischen ihrer eingerückten und ihrer ausgerückten Stellung solange (hin und her) zu bewegen, wie der Druck der Fluidvorratsquelle über dem vorbestimmten Wert bleibt.

3. System nach einem der Ansprüche 1 oder 2, bei dem das Betätigungssignal durch Niedertreten eines Kupplungspedales (50) durch einen Fahrer erzeugt wird.

4. System nach einem der Ansprüche 1 oder 2, bei dem die fluidbetätigte Kupplung automatisch (betätigbar) ist und ein Steuermittel (52) zum Messen wenigstens eines Zustandes sowie zum Erzeugen des dem Wert des gemessenen Zustandes entsprechenden Betätigungssignales vorhanden ist.

5. System nach Anspruch 4, bei dem das Steuermittel (52) einen Drehzahl- bzw. Geschwindigkeitssensor umfaßt und der gemessene Zustand die Drehzahl bzw. Geschwindigkeit eines ausgewählten Gliedes ist.

6. System nach Anspruch 1, das eine Parkstellung (P) aufweist und bei dem das Betätigungssignal erzeugt wird, wenn die Kupplung durch einen Fahrer in die Parkstellung gebracht wird.

7. System nach Anspruch 2, das eine Parkstellung (P) aufweist und bei dem das Betätigungssignal nicht erzeugt wird, wenn die Kupplung durch einen Fahrer in die Parkstellung gebracht wird.

8. System nach einem der Ansprüche 1 oder 2, bei dem das erste fluidbetätigte Stellmittel ein Steuerventilmittel (22) sowie ein erstes Kolbenzylindermittel (14) aufweist, wobei das erste Kolbenzylindermittel mit dem Ventilmittel verbunden ist und dazu dient, die Kupplung zwischen der eingerückten und der ausgerückten Stellung (hin und her) zu bewegen, und bei der das Ventilmittel mit der Fluidquelle verbunden ist und das Betätigungssignal empfängt.

9. System nach einem der Ansprüche 1 oder 2, bei dem das zweite fluidbetätigte Stellmittel (31, 31A) ein Kolbenzylindermittel (32) aufweist.

10. System nach Anspruch 9, bei dem das federnde Vorspannmittel (48, 48A) im Innern einer Kammer (34, 34A) des Kolbenzylindermittels (32) angeordnet ist.

11. System nach Anspruch 4, das einen Anschlagbolzen aufweist, der dazu dient, das Vorspannmittel daran zu hindern, die Kupplung zu betätigen, wenn der durch das Steuermittel gemessene Zustand einen vorbestimmten Wert erreicht.

12. System nach Anspruch 11, bei dem der gemessene Zustand die Drehzahl bzw. Geschwindigkeit eines ausgewählten Gliedes ist und der vorbestimmte Wert eine ausgewählte Mindestdrehzahl bzw. -geschwindigkeit des ausgewählten Gliedes ist, unterhalb der der Anschlagbolzen (55) das Vorspannmittel (48) daran hindert, de Kupplung zu betätigen.

13. System nach Anspruch 11, bei dem der gemessene Zustand die Drehzahl bzw. Geschwindigkeit eines ausgewählten Gliedes ist und der vorbestimmte Wert eine ausgewählte Höchstdrehzahl bzw. -geschwindigkeit des ausgewählten Gliedes ist, oberhalb der der Anschlagbolzen (55) das Vorspannmittel (48) daran hindert, die Kupplung zu bewegen.

14. System nach Anspruch 1, das Gestängemittel aufweist, die dazu dienen, das Vorspannmittel (48) zu überwinden, um die Kupplung auszurücken.

15. System nach einem der Ansprüche 1 oder 2, bei dem das angetriebene Glied die Eingangswelle eines Geschwindigkeitswechselgetriebes ist.

16. System nach einem der Ansprüche 1 oder 2, bei dem das angetriebene Glied die Eingangswelle eines Geschwindigkeitswechselgetriebes ist und das antreibende Glied durch einen Fahrzeugmotor angetrieben ist.

**Revendications**

1. Un système d'actionnement (80) pour un embrayage actionné par fluide, du type se trouvant normalement dans une condition débrayée et pouvant opérer pour accoupler et désaccoupler un élément menant par rapport à un élément mené, ledit système étant du type comprenant une source de fluide sous pression (24) et un premier dispositif d'actionnement (9) actionné par fluide et pouvant être relié sélectivement à ladite source de fluide pour amener ledit embrayage dans une condition embrayée en réponse à un signal d'actionnement reçu par lui, et ledit système d'actionnement étant caractörisé en ce qu'il comprend un moyen prioritaire comprenant un moyen de sollicitation élastique (48) et un second dispositif d'actionnement (31) actionné par fluide et relié constamment à ladite source de fluide (24), ledit moyen de sollicitation (48) opérant de façon à amener ledit embrayage dans sa condition embrayée à chaque fois que la pression de ladite source de fluide baisse en dessous d'une valeur prédéterminée, et ledit second dispositif d'actionnement (31) actionné par fluide opérant de façon à surcompenser ledit moyen de sollicitation et à permettre audit premier dispositif d'actionnement (9) actionné par fluide de manœuvrer ledit embrayage entre les conditions d'embrayage et de débrayage tant que la pression de ladite source de fluide reste supérieure à ladite valeur prédéterminée.

2. Un système d'actionnement (100) pour un embrayage actionné par fluide, du type se trouvant normalement dans une condition embrayée et pouvant opérer pour accoupler et désaccoupler un élément menant par rapport à un élément mené, ledit système étant du type comprenant une source de fluide sous pression (24) et un premier dispositif d'actionnement (9) actionné par fluide et pouvant être relié sélectivement à ladite source de fluide pour amener ledit embrayage dans une condition débrayée en réponse à un signal d'actionnement reçu par lui, ledit système d'actionnement étant caractérisé en ce qu'il comprend un moyen prioritaire comprenant un moyen de sollicitation élastique (48A) et un second dispositif d'actionnement (31A) actionné par fluide et relié constamment à ladite source de fluide, ledit moyen de sollicitation (48A) opérant de façon à amener ledit embrayage dans sa condition débrayée à chaque fois que la pression de ladite source de fluide baisse en dessous d'une valeur prédéterminée, et ledit second dispositif d'actionnement (31A) actionné par fluide opérant de façon à surcompenser ledit moyen de sollicitation (48A) et à permettre audit premier dispositif d'actionnement (9A) actionné par fluide de manœuvrer ledit embrayage entre les conditions d'embrayage et de débrayage tant que la pression de ladite source de fluide reste supérieure à ladite valeur prédéterminée.

3. Le système selon la revendication 1 ou 2, dans lequel ledit signal d'actionnement est produit par abaissement d'une pédale d'embrayage (50) par un conducteur.

4. Le système selon la revendication 1 ou 2, dans lequel ledit embrayage actionné par fluide est automatique et il est prévu un moyen de commande (52) pour détecter au moins une condition et pour produire ledit signal d'actionnement en correspondance avec la valeur de la condition détectée.

5. Le système selon la revendication 4, dans lequel le moyen de commande (52) comprend un capteur de vitesse et la condition détectée est une vitesse d'un élément sélectionné.

6. Le système selon la revendication 1, faisant intervenir une condition de stationnement (P) et où ledit signal d'actionnement est produit quand l'embrayage est placé dans la condition de stationnement par un conducteur.

7. Le système selon la revendication 2, dans lequel il intervient une condition de stationnement (P) et où ledit signal d'actionnement n'est pas produit quand l'embrayage est placé dans la condition de stationnement par un conducteur.

8. Le système selon la revendication 1 ou 2, dans lequel ledit premier dispositif d'actionnement actionné par fluide comprend un moyen formant distributeur de commande (22) et un premier mécanisme à piston (14), ledit premier mécanisme à piston étant relié audit moyen formant distributeur et opérant de façon à manœuvrer l'embrayage entre lesdites conditions d'embrayage et de débrayage, et ledit moyen formant distributeur étant relié à ladite source de fluide et opérant de façon à recevoir ledit signal d'actionnement.

9. Le système selon la revendication 1 ou 2, dans lequel le second dispositif d'actionnement actionné par fluide (31, 31A) comprend un mécanisme à piston (32).

10. Le système selon la revendication 9, dans lequel le moyen de sollicitation élastique (48, 48A) est disposé à l'intérieur d'une chambre (34, 34A) dudit mécanisme à piston (32).

11. Le système selon la revendication 4, comprenant un téton de butée opérant de façon à empêcher le moyen de sollicitation d'actionner l'embrayage quand la condition détectée par le moyen de commande atteint une valeur prédéterminée.

12. Le système selon la revendication 11, dans lequel la condition détectée est la vitesse d'un élémentsélectionné et la valeur prédéterminée est une vitesse minimale sélectionnée de l'élément sélectionné en dessous de laquelle le téton de butée (55) opère pour empêcher le moyen sollicitation (48) de manœuvrer l'embrayage.

13. Le système selon la revendication 11, dans lequel la condition détectée est la vitesse d'un élément sélectionné et la valeur prédéterminée est une vitesse maximale sélectionnée de l'élément sélectionné audessus de laquelle le téton de butée (55) opère pour empêcher le moyen de sollicitation (48) de manœuvrer l'embrayage.

14. Le système selon la revendication 1, comprenant un moyen formant tringlerie et opérant pour surcompenser le moyen de sollicitation (48) pour débrayer le moyen d'embrayage.

15. Le système selon la revendication 1 ou 2, dans lequel l'élément mené est un élément d'entrée d'une transmission de sélection de rapport.

16. Le système selon la revendication 1 ou 2, dans lequel l'élément mené est un élément d'entrée d'une transmission de sélection de rapport et l'élément menant est entraîné par un moteur de véhicule.

DISENGAGED

ENGAGED

Fig.2

Fig.1

EP 0 197 651 B1

FIG. 3

ENGAGED ②

DISENGAGED ①

26A

4

42

40

38

4

28

6

8

35

36

48A

46 32

18A

10

12

11A

16

34A

33A

31A

8

8

9A

8

100

50

52

53

55

(P)

24

22

20

20

20

20